# EUROPEAN PATENT APPLICATION

(11) **EP 0 626 355 A1**
(43) Date of publication of application: **30.11.1994**
(21) Application number: 94108233.1
(22) Date of filing: 27.05.1994
(51) Int. Cl.: C04B 28/02, C04B 41/63, A01N 25/34

(54) **Wall material having a sterilizing effect and method for using the same**

(30) Priority: 27.05.1993 JP 126335/93
(71) Applicant: Ogushi, Yoshiyuki, Fukuoka-shi, Fukuoka (JP)
(72) Inventor: Ogushi, Yoshiyuki, Fukuoka-shi, Fukuoka (JP)
(74) Representative: Henkel, Feiler, Hänzel & Partner

(57) **Abstract**

Wall material has a favorable sterilizing effect against Pseudomonous aeruginosa or MRSA (methicillin resistant staphylococcus aereus) which are main germs for hospital infection. The wall material having a sterilizing effect is characterized in that composite polymer emulsion including acrylic ester copolymer as main constituent and ceramic powder are mixed into mortar. Such wall material can drastically reduce not only Pseudomonous aeruginosa but also MRSA due to the favorable sterilizing effect of the composite polymer emulsion and the ceramic powder.

## Description

### BACKGROUND OF INVENTION

This invention relates to wall material having a favorable sterilizing effect against Pseudomonous aeruginosa or MRSA (methicillin resistant staphylococcus aereus) which are main germs for hospital infection and the method for using such a wall material.

Generally, followings are considered to be mechanisms how the hospital infection occurs.

① Patients who do not have resistance against infection is increasing in number.

② Treatments or inspections which weaken the patient's resistance against infection have been applied to the patients.

③ Medical treatments which hamper the normal defense mechanism of the patients are applied to the patients.

④ Chemical treatment agents, especially multi-purpose antibiotics have been heavily dosed to the patients for a long time.

⑤ The structure of hospital rooms, especially the wall and the floor of rooms promote the growth of Pseudomonous aeruginosa or MRSA.

Among above mechanisms, upon focusing on the mechanism ⑤, it is noticed that the conventional wall material of the hospital is mainly made of cement mortar layer and an ornamental material such as paint.

The wall material, however, has following problems in terms of hospital infections.

Namely, since the wall material is mainly made of mortar and the mortar has a great hygroscopicity, the front and rear surfaces of the wall material become the best place for promoting the growth of Pseudomonous aeruginosa or MRSA.

Accordingly, it is an object of the present invention to provide wall material having a sterilizing effect which can overcome the above mentioned problems.

It is another object of the present invention to provide various methods for effectivel utilizing the wall material having a sterilizing effect.

This invention discloses wall material having a sterilizing effect characterized in that the wall material is made by mixing composite polymer emulsion including acrylic ester copolymer as main constituent and ceramic powder into mortar.

In the above composition, mortar may preferably be made by mixing silica sand, iron oxide powder, zinc oxide and others into white cement or Portland cement.

The composite polymer emulsion has a sterilizing effect against Pseudomonous aeruginosa or MRSA. The composite polymer emulsion may preferably be acrylic ester copolymer solutions including 25 to 50 % of solid components.

The ceramic powder also has a sterilizing effect against Pseudomonous aeruginosa or MRSA. The ceramic powder may preferably be produced by firstly sintering silica sand and milling the sand into ceramic in a powdered form.

It is also preferable to set the mixing ratio between the composite polymer emulsion and the mortar including ceramic powder at 1 : 1 to 1 : 6.5.

This invention also discloses various methods for effectively utilizing the wall material having a sterilizing effect.

### BRIEF EXPLANATION OF DRAWAINGS

Fig. 1 is an explanatory view showing the manner of using wall material having a sterilizing effect.

Fig. 2 is an explanatory view showing another using manner.

### DETAILED DESCRIPTION OF THE PREFFERED EMBODIMENT

The manner of producing wall material having a sterilizing effect according to the present invention is explained hereinafter in detail.

Firstly, the composite polymer emulsion having following composition was prepared.

### Example 1)

| | |
|---|---|
| carboxy-modified styrene-butadiene | 13 wt % |
| cyclohexyl methacrylate-styrene copolymer | 51 wt % |
| fatty acid sodium salt | 1 wt % |
| water | 36 wt % |

Following composition can be also preferably employed.

### Example 2)

| | |
|---|---|
| carboxy-modified styrene-butadiene | 13 wt % |
| styrene | 25 wt % |
| cyclohexyl methacrylate | 26 wt % |
| pigment | 5 wt % |
| fatty acid sodium salt | 1 wt % |
| water | 30 wt % |

The mortar into which the above composite polymer emulsion is to be mixed had following composition including ceramic powder.

| | |
|---|---|
| white cement | 28.0 wt % |
| silica sand (SiO₂) | 35.5 wt % |
| ceramic powder (SiO₂) | 35.5 wt % |
| iron oxide powder (Fe₃O₄) | 0.2 wt % |
| zinc oxide (ZnO) | 0.1 wt % |
| titanium oxide (TiO₂) | 0.1 wt % |
| glycine and balance | 0.6 wt % |

The above white cement had following composition.

| | |
|---|---|
| CaO | 65.4 wt % |
| SiO₂ | 23.1 wt % |
| iron oxide powder (Fe₃O₄) | 0.2 wt % |
| Igloss | 2.7 wt % |
| Insol | 0.2 wt % |
| Al₂O₃ | 4.3 wt % |
| MgO | 0.6 wt % |
| SO₃ | 2.8 wt % |
| balance | 0.7 wt % |

Portland cement can be made in lieu of this white cement.

The above ceramic powder was prepared by crashing and milling wasted suspension-type electric insulators which were no more used and the ceramic powder had a following composition.

| | |
|---|---|
| SiO₂ | 70.7 wt % |
| Al₂O₃ | 20.9 wt % |
| Fe₂O₃ | 0.78 wt % |
| CaO | 0.45 wt % |
| MgO | 0.19 wt % |
| balance | 6.98 wt % |

The particle size of the ceramic powder was 74µm to 149µm.

In the above composition, although the pigment was mixed into the composite polymer emulsion, the pigment or water-soluble paint or both of them may be mixed into mortar, or mortar and the composite polymer emulsion with desired color.

To be more specific, as a non-organic pigment, titanium oxide (white), carbon black (black), Indian red (red), titanium yellow (yellow), chromic oxide (green), genuine blue (blue) can be used. As an organic pigment, permanent red (red), Hanza yellow (yellow), phthalocyanine green (green), phthalocyanine blue (blue), dioxazine violet (violet) can be used.

Mortar was mixed with the composite polymer emulsion at the rate of 1 : 1.0 to 6.5 by weight and the mixture was agitated to produce the wall material having a sterilizing effect.

Subsequently, the wall material having a sterilizing effect according to this invention which was produced in the above manner was subjected to an experiment and the test conditions and the test result are described as follows.

### (Purpose)

The effect of the wall material having a sterilizing effect was tested in vitro.

### (Testing Organization)

C.R.C Incorporated in Japan. germ inspection room

### (Testing Piece)

Wall material: brown 30 mm × 30 mm
strain ①: Pseudomonous aeruginosa (Pseudomonous aeruginosa ATCC 27853)
strain ②: MRSA (methicillin resistant staphylococcus aereus)

### (Testing Manner)

### 1) Preparation of wall material

Wall material ① was cut into test pieces each having a square shape of 30 mm and the test pieces were sterilized in the autoclave for 15 minutes at the temperature of 121 °C.

### 2) Preparation of germ species

Pseudomonous aeruginosa (ATCC 27853) and MRSA (clinical isolated strain) were fermented for 24 hours at the temperature of 35°C using an HI broth.

### 3) Adjustment/Measurement

Liquid containing the strains was fermented for 24 hours at 35 °C using the HI broth and 200 µl of liquid containing the strains was filled in 800µl of HI broth. The measurement was carried out in such a manner that a series of diluted liquid each of which was prepared by dropping 100 µl of liquid containing the strains into 900 µl of the HI broth, and the 20 µl of the standard agar fermenting base, the mixture was agitated by a CONRADI bar and was fermented for 24 hours at the temperature of 35 °C. As a control, KIMWIPE cloth of 30 mm× 30 mm was used.

### 4) Result

**Table 1**

| | Pseudomonous aeruginosa | | | MRSA |
|---|---|---|---|---|
| Original liquid | 3.9 × 10¹⁰ | | 1.0 × 10¹⁰ | |
| Diluted Liquid | KIMWIPE cloth | Wall material | KIMWIPE cloth | Wall material |
| 7 | 57 (+) | 0 (-) | 92 (+) | 0 (-) |
| 6 | 57 (+) | 0 (-) | (+) | 0 (-) |
| 5 | (+) | 0 (-) | (+) | 0 (-) |
| 4 | (+) | 0 (-) | (+) | 4 |
| 3 | (+) | 0 (-) | (+) | 22 |
| 2 | (+) | 0 (-) | (+) | 122 |
| 1 | (+) | 0 (-) | (+) | (+) |
| Remained germ | 2.9 ×10¹⁰ | 10³ ≧ | 1.9×10¹⁰ | 2.0×10⁶ |
| | | | | 1.1×10⁶ |
| | | | | 6.1×10⁵ |

### 5) Conclusion

As can be readily understood from the above table, due to the sterilizing effect of the composite polymer emulsion and the ceramic powder which are mixed into the wall material having a sterilizing effect according to the present invention, Pseudomonous aeruginosa decreased below 10¹⁰ ml, while MRSA decreased from 10¹⁰ to 10⁶ ml, approximately half level. Namely, the wall material of this invention proved a favorable sterilizing effect.

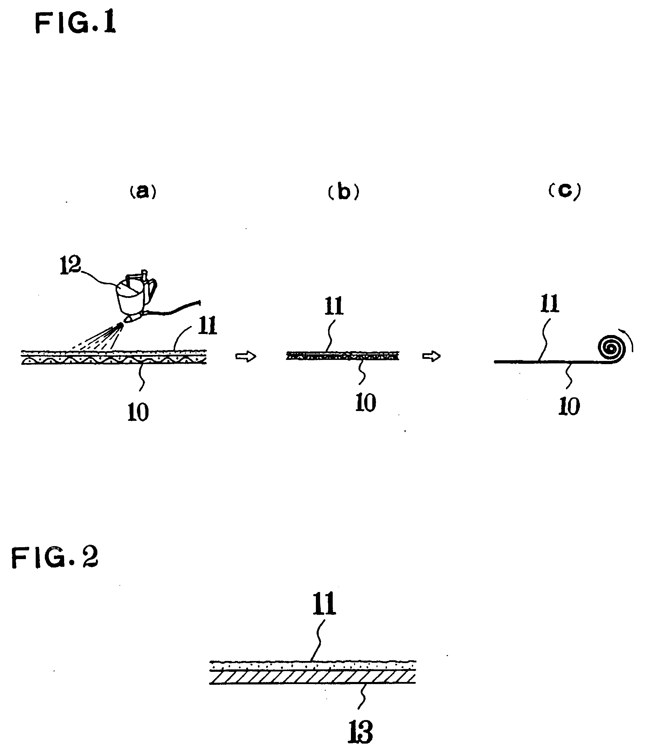

Furthermore, although the wall material of this invention can be used as the wall body per se of the building construction made of concrete or other material, the wall material may preferably be used in the form shown in Fig. 1 and Fig. 2.

Namely, in Fig. 1, the wall material 11 which has the above mentioned composition was sprayed onto the surface of the unwoven cloth, the glass-fiber cloth or the woven cloth 10 using a spray gun 12 (Fig. 1(a)), the wall material 11 was dried with hot air (Fig. 1(a)) and the wall material is rolled and cut in a desired sized to be used in a sheet form.

In Fig. 2, the wall material 11 is used in a form of a ceiling board 13.

Still furthermore, the wall material 11 is directly sprayed onto the vertical wall or floor wall of the new or existing structure.

The wall material having a sterilizing effect according to this invention is characterized in that composite polymer emulsion including acrylic ester copolymer as main constituent and ceramic powder are mixed into mortar.

Such wall material can drastically reduce not only Pseudomonous aeruginosa but also MRSA due to the favorable sterilizing effect of the composite polymer emulsion and the ceramic powder which are mixed into the mortar.

Accordingly, the wall material of this invention is extremely effective for prevention of hospital infection.

## Claims

1. Wall material having a sterilizing effect characterized in that the wall material is made by mixing composite polymer emulsion including acrylic ester copolymer as main constituent and ceramic powder into mortar.

2. Wall material having a sterilizing effect according to claim 1, wherein the wall material is a wall body of a building construction.

3. Method for using wall material having a sterilizing effect characterized in that wall material having a sterizing effect is prepared by mixing composite polymer emulsion including acrylic ester copolymer as main constituent and ceramic powder into mortar is prepared, the wall material is sprayed onto the surface of one of a group consisting of an unwoven cloth, a glass-fiber cloth and a woven cloth using a spray gun, the wall material was dried with hot air and the wall material is rolled and cut into a sheet-like final wall material having a desired size.

4. Method for using wall material having a sterilizing effect accoridng to claim 3, wherein the final wall material is in a form of a ceiling board.

5. Method for using wall material having a sterilizing effect characterized in that wall material having a sterizing effect is prepared by mixing composite polymer emulsion including acrylic ester copolymer as main constituent and ceramic powder into mortar is prepared, the wall material is sprayed onto the surface of a vertical wall or a floor wall of a new or existing structure.
